(19) Europäisches Patentamt
European Patent Office
Office européen des brevets

(11) **EP 4 622 083 A1**

(12) **EUROPEAN PATENT APPLICATION**
published in accordance with Art. 153(4) EPC

(43) Date of publication:
**24.09.2025 Bulletin 2025/39**

(51) International Patent Classification (IPC):
***H02M 3/335*** (2006.01)

(21) Application number: **23902350.0**

(22) Date of filing: **02.11.2023**

(52) Cooperative Patent Classification (CPC):
**H02M 1/088; H02M 3/335; H02M 5/10; H02M 7/06;**
**H02M 7/5387;** Y02B 70/10; Y02T 10/70;
Y02T 10/7072

(86) International application number:
**PCT/CN2023/129438**

(87) International publication number:
**WO 2024/125150 (20.06.2024 Gazette 2024/25)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **16.12.2022 CN 202211625812**

(71) Applicant: **Acepower and Technologies Co., Ltd**
**Shanghai 201206 (CN)**

(72) Inventor: **YAN, Chao**
**Shanghai 201206 (CN)**

(74) Representative: **Slingsby Partners LLP**
**1 Kingsway**
**London WC2B 6AN (GB)**

(54) **MULTI-TRANSFORMER DC-DC CIRCUIT, AND CURRENT EQUALIZATION SYSTEM**

(57) This disclosure provides a multi-transformer DCDC circuit and a current equalization system, and relates to the fields of electronics and electric power techniques. The circuit includes two LLC circuits, each LLC circuit including a primary circuit, a secondary circuit and m transformers, each of the transformers including two primary windings and a secondary winding; wherein a first primary winding of an *i-th* transformer of the first LLC circuit is connected in series with a first primary winding of an *i-th* transformer of the second LLC circuit and then connected to a corresponding primary circuit, a second primary winding of the *i-th* transformer of the first LLC circuit is connected in series with a second primary winding of an *i-th* transformer of the second LLC circuit and then connected to a corresponding primary circuit, and secondary windings of the transformers are connected to corresponding secondary circuits. Power equalization, i.e. natural current equalization, between two power units, is realized in this disclosure, control schemes are simplified, and reliabilities of circuits are improved.

FIG. 2A

EP 4 622 083 A1

## Description

Technical Field

This disclosure relates to the fields of electronics and electric power techniques, and in particular to a multi-transformer DCDC circuit and a current equalization system.

Background

In recent years, electric vehicles have shown promising prospects due to their relatively small environmental impact compared to traditional vehicles. As electric vehicles are powered by onboard power supplies and batteries have less energy storage per unit weight, consumers need to charge them frequently, so as to ensure normal use of electric vehicles.

Summary

It was found by the inventors that current charging techniques are gradually unable to meet requirements of consumers for charging speeds of electric vehicles.

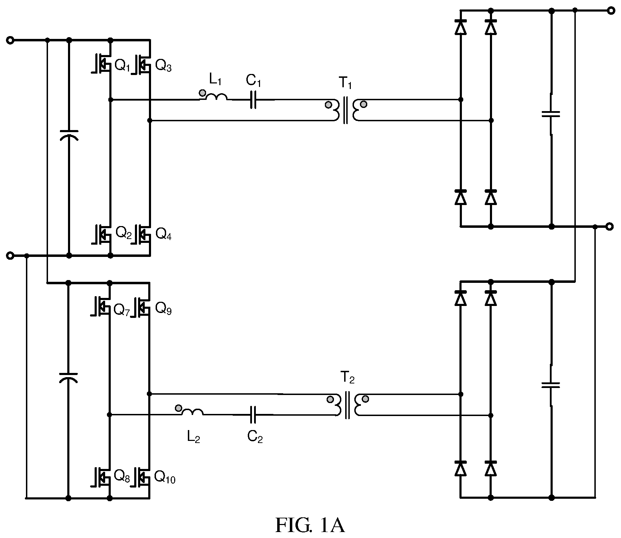

Faster charging speed means higher charging power, hence, the market is increasingly demanding higher power from charging modules in charging stations. Series parallel structures of circuit topology are commonly used in existing circuit designs to meet higher power requirements. For example, FIG. 1A shows a parallel topology structure of a conventional two-path LLC full bridge circuit. As there exit tolerances of such LLC parameters as inductors and resonant capacitors, in order to achieve current sharing in the operations of these two LLC circuits, it is needed to independently detect respective output currents of the two-path LLC, so as to independently control switching frequencies of the two-path LLC. However, in this mode, the switching frequencies of the two-path LLC will be inconsistent.

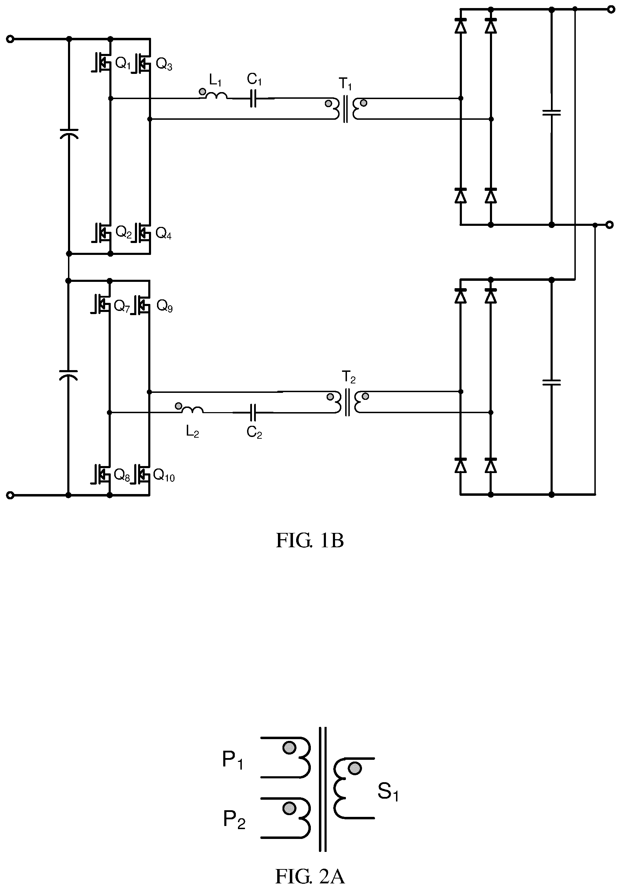

For example, FIG. 1B shows a conventional topology structure of two-path LLC with primary series and secondary parallel. In a coupling mode of primary series, two LLC full bridge circuits are controlled to be at the same operating frequency. As the primary is connected in series, DC currents of the primary is consistent. However, as differences may possibly exist in resonance parameters in the two LLC circuits, only basic power equalization, i.e. current basic equalization, can be achieved for the two LLC full bridge circuits.

In order to solve at least one of the above problems, this disclosure provide a multi-transformer DCDC circuit, including two LLC circuits, each LLC circuit including a primary circuit, a secondary circuit and m transformers,

each of the transformers including two primary windings and a secondary winding arranged between the two primary windings;

wherein the two LLC circuits includes a first LLC circuit and a second LLC circuit, a first primary winding of an *i-th* transformer of the first LLC circuit being connected in series with a first primary winding of an *i-th* transformer of the second LLC circuit and then connected to a corresponding primary circuit, a second primary winding of the *i-th* transformer of the first LLC circuit being connected in series with a second primary winding of an *i-th* transformer of the second LLC circuit and then connected to a corresponding primary circuit, and the secondary windings of the transformers are connected to corresponding secondary circuits; where, 1≤i≤m, and both i and m are positive integers.

In some embodiments, the primary circuit includes a full-bridge circuit, and a value of m is 1;

wherein the primary circuit of the first LLC circuit includes a first switching tube, a second switching tube, a third switching tube and a fourth switching tube, the first switching tube and the second switching tube being connected in series and then connected in parallel with the third switching tube and the fourth switching tube that are connected in series, the primary circuit of the second LLC circuit includes a fifth switching tube, a sixth switching tube, a seventh switching tube and an eighth switching tube, the fifth switching tube and the sixth switching tube being connected in series and then connected in parallel with the seventh switching tube and the eighth switching tube that are connected in series;
a first primary winding of a transformer of the first LLC circuit is connected in series with a set of resonant capacitors and resonant inductors and then connected between the first switching tube and the second switching tube, and a first primary winding of a transformer of the second LLC circuit is connected between the third switching tube and the fourth switching tube;
a second primary winding of the transformer of the first LLC circuit is connected between the seventh switching tube and the eighth switching tube, and a second primary winding of the transformer of the second LLC circuit is connected in series with a set of resonant capacitors and resonant inductors and then connected between the fifth switching tube and sixth switching tube.

In some embodiments, the secondary circuit includes a full wave rectifier circuit;

the secondary circuit of the first LLC circuit includes a first diode, a second diode, a third diode and a fourth diode, the first diode and the second diode being connected in series and then connected in parallel with the third diode and the fourth diode that are connected in series, the secondary circuit of the second LLC circuit includes a fifth diode, a sixth diode, a seventh diode and an eighth diode, the fifth diode and the sixth diode being connected in series and then connected in parallel with the seventh diode and the eighth that are connected in series;

one end of the secondary winding of the transformer of the first LLC circuit is connected between the first diode and the second diode, and the other end thereof is connected between the third diode and the fourth diode;

one end of the secondary winding of the transformer of the second LLC circuit is connected between the fifth diode and the sixth diode, and the other end thereof is connected between the seventh diode and the eighth diode.

In some embodiments, the secondary circuit includes a synchronous rectifier circuit;

the secondary circuit of the first LLC circuit includes a ninth switching tube, a tenth switching tube, an eleventh switching tube and a twelfth switching tube, the ninth switching tube and the tenth switching tube being connected in series and then connected in parallel with the eleventh switching tube and the twelfth switching tube that are connected in series, the secondary circuit of the second LLC circuit includes a thirteenth switching tube, a fourteenth switching tube, a fifteenth switching tube and a sixteenth switching tube, the thirteenth switching tube and the fourteenth switching tube being connected in series and then connected in parallel with the fifteenth switching tube and the sixteenth switching tube that are connected in series;

one end of the secondary winding of the transformer of the first LLC circuit is connected between the ninth switching tube and the tenth switching tube, and the other end thereof is connected between the eleventh switching tube and the twelfth switching tube;

one end of the secondary winding of the transformer of the second LLC circuit is connected between the thirteenth switching tube and the fourteenth switching tube, and the other end thereof is connected between the fifteenth switching tube and the sixteenth switching tube.

In some embodiments, the primary circuit includes a three-phase bridge circuit, and a value of m is 3;

wherein the primary circuit of the first LLC circuit includes a first switching tube, a second switching tube, a third switching tube, a fourth switching tube, a fifth switching tube and a sixth switching tube, the first switching tube and the second switching tube being connected in series and then respectively connected in parallel with the third switching tube and the fourth switching tube that are connected in series and the fifth switching tube and the sixth switching tube that are connected in series; the primary circuit of the second LLC circuit includes a seventh switching tube, an eighth switching tube, a ninth switching tube, a tenth switching tube, an eleventh switching tube and a twelfth switching tube, the seventh switching tube and the eighth switching tube being connected in series and then respectively connected in parallel with the ninth switching tube and the tenth switching tube that are connected in series and the eleventh switching tube and the twelfth switching tube that are connected in series; the second primary winding of the first transformer of the first LLC circuit is connected between the first switching tube and the second switching tube, the first primary winding of the first transformer of the second LLC circuit is connected between the seventh switching tube and the eighth switching tube, and the first primary winding of the first transformer of the first LLC circuit is connected in series with a set of resonant capacitors and resonant inductors, and then connected to the second primary winding of the first transformer of the second LLC circuit via another set of resonant capacitors and resonant inductors;

a second primary winding of a second transformer of the first LLC circuit is connected between the third switching tube and the fourth switching tube, a first primary winding of the second transformer of the second LLC circuit is connected between the ninth switching tube and the tenth switching tube, and the first primary winding of the second transformer of the first LLC circuit is connected in series with a set of resonant capacitors and resonant inductors, and then connected to the second primary winding of the second transformer of the second LLC circuit via another set of resonant capacitors and resonant inductors;

a second primary winding of a third transformer of the first LLC circuit is connected between the fifth switching tube and sixth switching tube, a first primary winding of the third transformer of the second LLC circuit is connected between the eleventh switching tube and the twelfth switching tube, and the first primary winding of the third transformer of the first LLC circuit is connected in series with a set of resonant capacitors and resonant inductors, and then connected to the second primary winding of the third transformer of the second LLC circuit via another set of resonant capacitors and resonant inductors.

In some embodiments, the secondary circuit includes a full wave rectifier circuit;

the secondary circuit of the first LLC circuit includes a first diode, a second diode, a third diode, a fourth diode, a fifth diode and a sixth diode, the first diode and the second diode being connected in series and then respective connected in parallel with the third diode and the fourth diode that are connected in series and the fifth diode and the sixth diode that are connected in series, the secondary circuit of the second LLC circuit includes a seven diode, an eighth diode, a ninth diode, a tenth diode, an eleventh diode and a twelfth diode, the seven diode and the eighth diode being connected in series and then respective connected in parallel with the ninth diode and the tenth diode that are connected in series and the eleventh diode and the twelfth diode that are connected in series;

a first end of the secondary winding of the first transformer of the first LLC circuit is connected between the first diode and the second diode, a first end of the secondary winding of the second transformer of the first LLC circuit is connected between the third diode and the fourth diode, a first end of the secondary winding of the third transformer of the first LLC circuit is connected between the fifth diode and the sixth diode, a second end of the secondary winding of the first transformer of the first LLC circuit is connected to a second end of the secondary winding of the second transformer of the first LLC circuit and a second end of the secondary winding of the third transformer of the first LLC circuit;

a first end of the secondary winding of the first transformer of the second LLC circuit is connected between the seventh diode and the eighth diode, a first end of the secondary winding of the second transformer of the second LLC circuit is connected between the ninth diode and the tenth diode, a first end of the secondary winding of the third transformer of the second LLC circuit is connected between the eleventh diode and the twelfth diode, a second end of the secondary winding of the first transformer of the second LLC circuit is connected to a second end of the secondary winding of the second transformer of the second LLC circuit and a second end of the secondary winding of the third transformer of the second LLC circuit.

In some embodiments, the secondary circuit includes a synchronous rectifier circuit;

the secondary circuit of the first LLC circuit includes a thirteenth switching tube, a fourteenth switching tube, a fifteenth switching tube, a sixteenth switching tube, a seventeenth switching tube and an eighteenth switching tube, the thirteenth switching tube and the fourteenth switching tube being connected in series and then respectively connected in parallel with the fifteenth switching tube and the sixteenth switching tube that are connected in series and the seventeenth switching tube and the eighteenth switching tube that are connected in series, and the secondary circuit of the second LLC circuit includes a nineteenth switching tube, a twentieth switching tube, a twenty-first switching tube, a twenty-second switching tube, a twenty-third switching tube and a twenty fourth switching tube, the nineteenth switching tube and the twentieth switching tube being connected in series and then respectively connected in parallel with the twenty-first switching tube and the twenty-second switching tube that are connected in series and the twenty-third switching tube and the twenty-fourth switching tube that are connected in series;

the first end of the secondary winding of the first transformer of the first LLC circuit is connected between the thirteenth switching tube and fourteenth switching tube, the first end of the secondary winding of the second transformer of the first LLC circuit is connected between the fifteenth switching tube and sixteenth switching tube, the first end of the secondary winding of the third transformer of the first LLC circuit is connected between the seventeenth switching tube and eighteenth switching tube, the second end of the secondary winding of the first transformer of the first LLC circuit is connected to the second end of the secondary winding of the second transformer of the first LLC circuit and the second end of the secondary winding of the third transformer of the first LLC circuit;

the first end of the secondary winding of the first transformer of the second LLC circuit is connected between the nineteenth switching tube and the twentieth switching tube, the first end of the secondary winding of the second transformer of the second LLC circuit is connected between the twenty-first switching tube and the twenty-second switching tube, the first end of the secondary winding of the third transformer of the second LLC circuit is connected between the twenty-third switching tube and twenty-fourth switching tube, and the second end of the secondary winding of the first transformer of the second LLC circuit is connected to the second end of the secondary winding of the second transformer of the second LLC circuit and the second end of the secondary winding of the third transformer of the second LLC circuit.

In some embodiments, any resonant inductor in the multi-transformer DCDC circuit is integrated into leakage inductance of a transformer to which the resonant inductor corresponds.

In some embodiments, the primary circuit of the first LLC circuit is connected in parallel with the primary circuit of the second LLC circuit.

In some embodiments, the primary circuit of the first LLC circuit is connected in series with the primary circuit of the second LLC circuit.

In some embodiments, this disclosure further provides a current equalization system, the current equalization system using any multi-transformer DCDC provided in this disclosure.

With very simple synchronization control techniques, on the premise of realizing the function of power parallel, power equalization, i.e. natural current equalization, between two power units, is simultaneously realized in the multi-transformer DCDC circuit and the current equalization system in this disclosure naturally, control schemes are simplified, and reliabilities of circuits are improved.

Brief Description of the Drawings

In order to provide clearer explanations of the embodiments of this disclosure or technical solutions in the related art, a brief introduction will be given to accompanying drawings required for description of the embodiments or the related art. Obviously, the accompanying drawings described below are only some embodiments of this disclosure. For those skilled in the art, other drawings may be obtained according to these drawings without making an inventive effort. In the drawings:

FIGs. 1A and 1B are topology structures of LLC circuits in the related art;
FIGs. 2A and 2B are schematic diagrams of structures of transformer provided in this disclosure;
FIGs. 3A and 3B are connection relationships between primary windings and secondary windings of the transformers provided in this disclosure;
FIG. 4A is a schematic diagram of the primary circuit and a connection relationship between it and a transformer provided in this disclosure;
FIG. 4B is a schematic diagram of driving pulses of switching tubes in the primary circuit shown in FIG. 4A;
FIG. 4C is a schematic diagram of the secondary circuit and a connection relationship between it and a transformer provided in this disclosure;
FIG. 4D is another schematic diagram of the secondary circuit and the connection relationship between it and a transformer provided in this disclosure;
FIG. 5A is another schematic diagram of the primary circuit and the connection relationship between it and a transformer provided in this disclosure;
FIG. 5B is a schematic diagram of driving pulses of switching tubes in the primary circuit shown in FIG. 5A;
FIG. 5C is another schematic diagram of the secondary circuit and the connection relationship between it and a transformer provided in this disclosure;
FIG. 5D is a further schematic diagram of the secondary circuit and the connection relationship between it and a transformer provided in this disclosure;
FIG. 6A is a topological graph of the circuit shown in FIG. 4C after leakage inductance integration;
FIG. 6B is a topological graph of the circuit shown in FIG. 4D after leakage inductance integration;
FIG. 6C is a topological graph of the circuit shown in FIG. 5C after leakage inductance integration; and
FIG. 6D is a topological graph of the circuit shown in FIG. 5D after leakage inductance integration.

Detailed Description

In order to make the purpose, technical solutions and advantages of the embodiments of this disclosure more clear, the embodiments of this disclosure shall be described below with reference to the accompanying drawings. Here, illustrative embodiments of this disclosure and their explanations are used to explain this disclosure, and are not intended to limit this disclosure.

It should be noted that the multi-transformer DCDC circuit of this disclosure may be applicable to the fields of electronic and electrical power techniques, and may also be applicable to other fields than the fields of electronic and electrical power techniques. Application fields of the multi-transformer DCDC circuit are not limited in this disclosure.

This disclosure provides a multi-transformer DCDC circuit, including two LLC circuits, each LLC circuit including a primary circuit, a secondary circuit and m transformers.

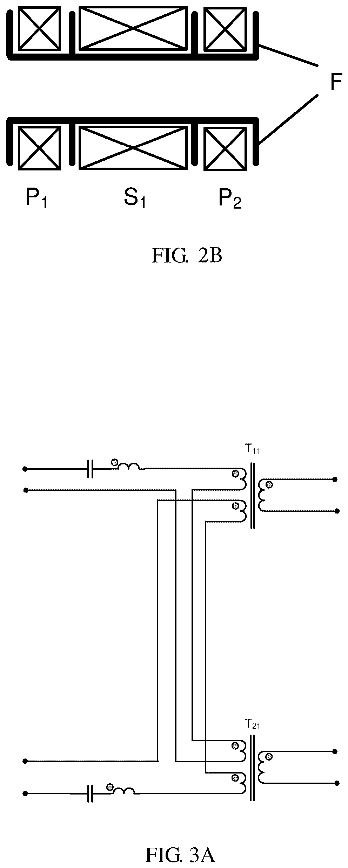

In particular, referring to FIGs. 2A-2B for structures of the transformers, each of the transformers includes a primary winding $P_1$, a primary winding $P_2$ and a secondary winding $S_1$, wherein the secondary winding $S_1$ is arranged between the primary winding $P_1$ and the primary winding $P_2$. FIG. 2A is a sectional view of a transformer. The primary winding $P_1$, the secondary winding $S_1$ and the primary winding $P_2$ are sequentially wound around a frame F from the left to the right. One of features of the transformer shown in FIGs. 2A and 2B is that the two primary windings of the transformer is relatively far from each other, and a coupling coefficient thereof is relatively low, which is generally not higher than 0.95, that is, the coupling coefficient of the two primary windings of the transformer adopted in this disclosure is less than or equal to 0.95. Here, the coupling coefficient is defined as follows:

$$k = \sqrt{1 - \frac{L_{sc}}{L_{open}}};$$

where, $k$ is the coupling coefficient of the primary winding $P_1$ and the primary winding $P_2$, $L_{sc}$ is leakage inductance at a side of the primary winding $P_1$ measured when the primary winding $P_2$ is short-circuited, and $L_{open}$ is inductance at the side of the primary winding $P_1$ measured when the primary winding $P_2$ is open-circuited.

A connection mode of the primary windings and secondary windings of the transformers in the two LLC circuits is as follows: a first primary winding of an *i-th* transformer of the first LLC circuit is connected in series with a first primary winding of an *i-th* transformer of the second LLC circuit and then connected to a corresponding primary circuit, a second primary winding of the *i-th* transformer of the first LLC circuit is connected in series with a second primary winding of an *i-th* transformer of the second LLC circuit and then connected to a corresponding primary circuit, and the secondary windings of the transformers are connected to corresponding secondary circuits; where, $1 \leq i \leq m$, and both i and m are positive integers. The number m of the transformers in each LLC circuit may be greater than or equal to 1 and taken from 1, 2, 3, 4, 5, 6, 7, 8, 9, 10, 11, and 13, etc., which is illustrative only, and is not limited here.

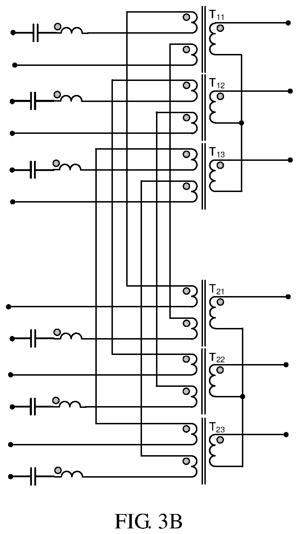

For example, FIG. 3A shows a connection relationship when it is assumed that each LLC circuit includes one transformer, wherein the first LLC circuit includes a transformer $T_{11}$, and the second LLC circuit includes a transformer $T_{21}$. FIG. 3B shows a connection relationship when it is assumed that each LLC circuit includes three transformers, wherein the first LLC circuit includes three transformers, $T_{11}$, $T_{12}$ and $T_{13}$, and the second LLC circuit includes three transformers, $T_{21}$, $T_{22}$ and $T_{23}$.

A connection mode of the primary circuits in the two LLC circuits may be as follows: the primary circuit of the first LLC circuit is connected in parallel with the primary circuit of the second LLC circuit, or the primary circuit of the first LLC circuit is connected in series with a DC input of the primary circuit of the second LLC circuit. When the parallel connection mode of the primary circuits is used, input voltages of the primary circuits may reach 650V-800V, but currents of each primary circuit may be reduced by half in comparison with those in the DC input series connection mode of the primary circuits, which is conducive to protecting electronic components in the LLC circuits, avoiding damages to the electronic components caused by overcurrents, and achieving relatively high efficiencies. However, both parallel connection of the primary circuits and the DC input series connection of the primary circuit are applicable to this disclosure, and natural current equalization and synchronous control of two LLC circuits may be achieved.

A connection mode of the secondary circuits in the two LLC circuits may be in consistence with the connection mode of the primary circuits, that is, when the primary circuits of the two LLC circuits are connected in parallel, the secondary circuits of the two LLC circuits are DC output connected in parallel; and when the primary circuits of the two LLC circuits are DC input connected in series, the secondary circuits of the two LLC circuits are DC output connected in series.

Connection relationships between the transformers and primary circuits and secondary circuits in the LLC circuits varies depending on types of the primary circuits and secondary circuits, and shall comply with circuit characteristics of the primary circuits and secondary circuits. Some specific examples are given in this disclosure for illustration. In the following examples, description shall be given by taking the connection mode where the primary circuits of the two LLC circuits are connected in parallel and the secondary circuits thereof are connected in parallel as an example; however, this disclosure is not limited thereto. Meanwhile, for ease of expression, it is collectively defined that the primary circuit of the first LLC circuit is $A_1$, the secondary circuit thereof is $B_1$, and the transformers thereof are $T_{11}$, $T_{12}$, $T_{13} \cdots\cdots T_{1m}$, and the primary circuit of the second LLC circuit is $A_2$, the secondary circuit thereof is $B_2$, and the transformers thereof are $T_{21}$, $T_{22}$, $T_{23} \cdots\cdots T_{2m}$; where, m is the number of transformers contained in each LLC circuit, which is a positive integer. The above definitions are applicable to all of the following examples.

Example 1: the primary circuit includes a full bridge circuit.

At this time, in order to comply with circuit characteristics of the full bridge circuit, each LLC circuit needs to include a transformer, that is, a value of m is 1.

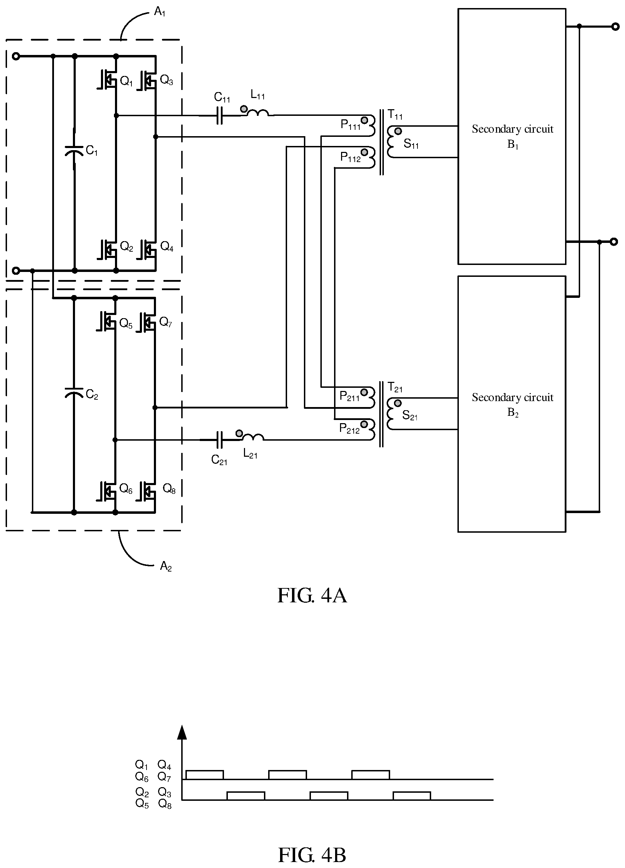

FIG. 4A shows a circuit topology in which two full bridge LLC circuits are connected in parallel, wherein the primary circuit $A_1$ includes three parallelly connected circuits, a first parallelly connected circuit including a capacitor $C_1$, a second parallelly connected circuit including a first switching tube $Q_1$ and a second switching tube $Q_2$ connected in series, and a third parallelly connected circuit including a third switching tube $Q_3$ and a fourth switching tube $Q_4$ connected in series. A structure of the primary circuit $A_2$ is similar to that of the primary circuit $A_1$, which also includes three parallelly connected circuits, a first parallelly connected circuit including a capacitor $C_2$, a second parallelly connected circuit including a fifth switching tube $Q_5$ and a sixth switching tube $Q_6$ connected in series, and a third parallelly connected circuit including a seventh switching tube $Q_7$ and an eighth switching tube $Q_8$ connected in series.

One end of a first primary winding $P_{111}$ of the transformer $T_{11}$ is connected in series with one end of a first primary winding $P_{211}$ of the transformer $T_{21}$, and the other end thereof is connected in series with a set of resonant capacitors $C_{11}$ and resonant inductors $L_{11}$ and then connected between the first switching tube $Q_1$ and the second switching tube $Q_2$, and the other end of the first primary winding $P_{211}$ of the transformer $T_{21}$ is connected between the third switching tube $Q_3$ and the fourth switching tube $Q_4$.

Likewise, one end of a second primary winding $P_{112}$ of the transformer $T_{11}$ is connected in series with one end of a second primary winding $P_{212}$ of the transformer $T_{21}$, and the other end thereof is connected between the seventh switching tube $Q_7$ and the eighth switching tube $Q_8$, and the other end of the second primary winding $P_{212}$ of the transformer $T_{21}$ is connected in series with a set of resonant capacitors $C_{21}$ and resonant inductors $L_{21}$ and then connected between the fifth switching tube $Q_5$ and the sixth switching tube $Q_6$.

FIG. 4B is a schematic diagram of driving pulses of switching tubes in the primary circuit shown in FIG. 4A. It can be seen from FIG. 4B that the first switching tube $Q_1$, the fourth switching tube $Q_4$, the sixth switching tube $Q_6$ and the seventh switching tube $Q_7$ are concurrently switched on, and the second switching tube $Q_2$, the third switching tube $Q_3$, the fifth switching tube $Q_5$ and the eighth switching tube $Q_8$ are concurrently switched on.

With the series coupling of the transformer with two primary windings between upper and lower full bridges as shown in Example 1, natural two full bridge LLC current equalization may be achieved, and the two full bridge circuits have consistent control frequencies. In normal operating conditions (excluding such special states as a starting state), control signals of the first switching tube $Q_1$, the fourth switching tube $Q_4$, the sixth switching tube $Q_6$ and the seventh switching tube $Q_7$ are consistent, and control signals of the second switching tube $Q_2$, the third switching tube $Q_3$, the fifth switching tube $Q_5$ and the eighth switching tube $Q_8$ are consistent. At the same time, complementation of the two control signals plus a certain dead time (the dead time is preset) will greatly simplify control lines and control algorithms, and may also avoid output of ripple currents and ripple voltages caused by a beat frequency (i.e. a frequency difference between two paths, which may vary over time) brought about by the asynchronous control mode of the circuit topology shown in FIG. 1A.

When the primary circuit is as shown in Example 1, the secondary circuit may refer to Example 2 and Example 3.

Example 2: the secondary circuit includes a full wave rectifier circuit composed of diodes.

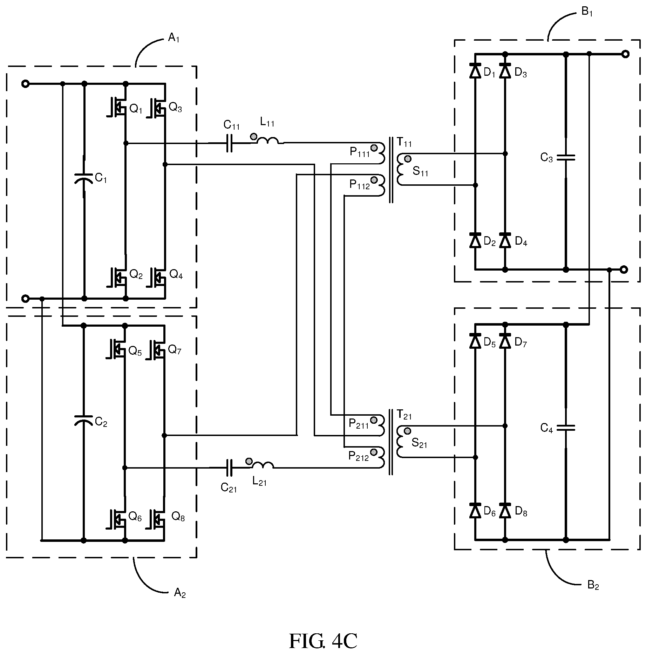

As shown in FIG. 4C, the secondary circuit $B_1$ includes three parallelly connected circuits, a first parallelly connected circuit including a capacitor $C_3$, a second parallelly connected circuit including a first diode $D_1$ and a second diode $D_2$ connected in series, and a third parallelly connected circuit including a third diode $D_3$ and a fourth diode $D_4$ connected in series. The secondary circuit $B_2$ has a structure similar to that of the secondary circuit $B_1$, which also includes three parallelly connected circuits, a first parallelly connected circuit including a capacitor $C_4$, a second parallelly connected circuit including a fifth diode $D_5$ and a sixth diode $D_6$ connected in series, and a third parallelly connected circuit including seventh diode $D_7$ and eighth diode $D_8$ connected in series.

One end of the secondary winding $S_{11}$ of the transformer $T_{11}$ is connected between the first diode $D_1$ and the second diode $D_2$, and the other end thereof is connected between the third diode $D_3$ and the fourth diode $D_4$.

Likewise, one end of the secondary winding $S_{21}$ of the transformer $T_{21}$ is connected between the fifth diode $D_5$ and the sixth diode $D_6$, and the other end thereof is connected between the seventh diode $D_7$ and the eighth diode $D_8$.

Example 3: the secondary circuit includes a synchronous rectifier circuit composed of switching tubes.

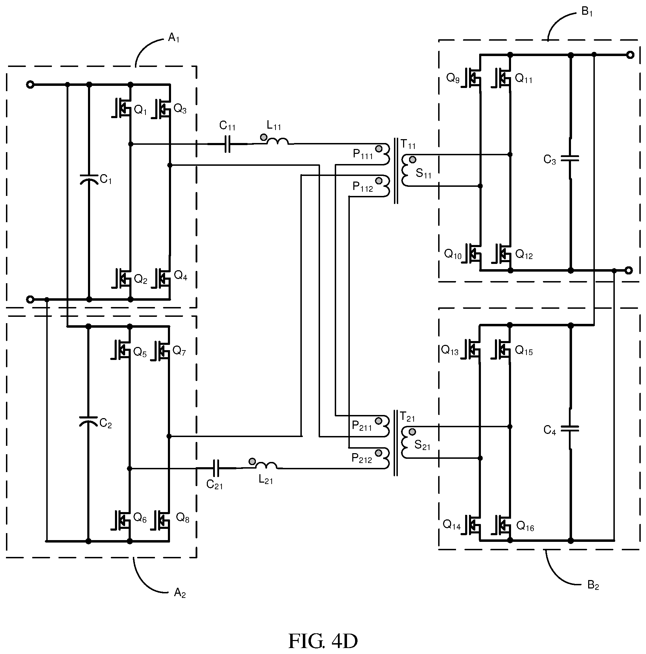

As shown in FIG. 4D, the secondary circuit $B_1$ includes three parallelly connected circuits, a first parallelly connected circuit including a capacitor $C_3$, a second parallelly connected circuit including a ninth switching tube $Q_9$ and a tenth switching tube $Q_{10}$ connected in series, and a third parallelly connected circuit including an eleventh switching tube $Q_{11}$ and a twelfth switching tube $Q_{12}$ connected in series. The secondary circuit $B_2$ has a structure similar to that of the secondary circuit $B_1$, which also includes three parallelly connected circuits, a first parallelly connected circuit including a capacitor $C_4$, a second parallelly connected circuit including a thirteenth switching tube $Q_{13}$ and a fourteenth switching tube $Q_{14}$ connected in series, and a third parallelly connected circuit including a fifteenth switching tube $Q_{15}$ and a sixteenth switching tube $Q_{16}$ connected in series.

One end of the secondary winding $S_{11}$ of the transformer $T_{11}$ is connected between the ninth switching tube $Q_9$ and the tenth switching tube $Q_{10}$, and the other end thereof is connected between the eleventh switching tube $Q_{11}$ and the twelfth switching tube $Q_{12}$.

Likewise, one end of the secondary winding $S_{21}$ of the transformer $T_{21}$ is connected between the thirteenth switching tube $Q_{13}$ and the fourteenth switching tube $Q_{14}$, and the other end thereof is connected between the fifteenth switching tube $Q_{15}$ and the sixteenth switching tube $Q_{16}$.

Example 4: the primary circuit includes a three-phase bridge circuit.

At this time, in order to comply with circuit characteristics of the three-phase bridge circuit, each LLC circuit needs to include three transformers, that is, a value of m is 3, a first LLC circuit including transformers $T_{11}$, $T_{12}$ and $T_{13}$, and the second LLC circuit including transformers $T_{21}$, $T_{22}$ and $T_{23}$.

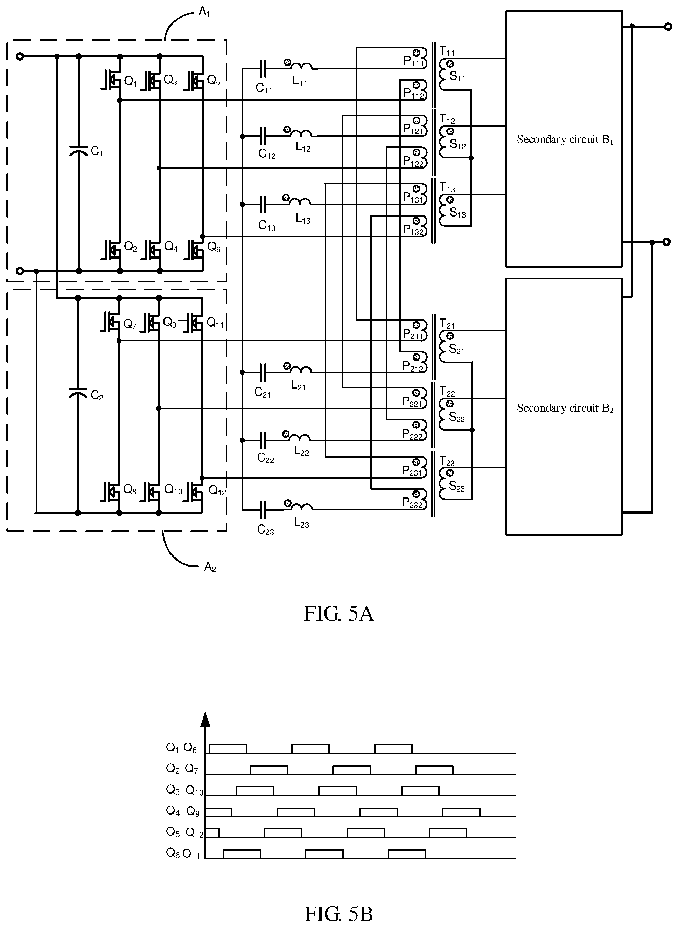

FIG. 5A shows a circuit topology in which two three-bridge LLC circuits are connected in parallel, wherein the primary circuit $A_1$ includes four parallelly connected circuits, a first parallelly connected circuit including a capacitor $C_1$, a second parallelly connected circuit including a first switching tube $Q_1$ and second switching tube $Q_2$ connected in series, a third parallelly connected circuit including a third switching tube $Q_3$ and fourth switching tube $Q_4$ connected in series, and a fourth parallelly connected circuit including a fifth switching tube $Q_5$ and sixth switching tube $Q_6$ connected in series. The primary circuit $A_2$ has a structure similar to that of the primary circuit $A_1$, which also includes four parallelly connected circuits, a first parallelly connected circuit including a capacitor $C_2$, a second parallelly connected circuit including a seventh switching tube $Q_7$ and eighth switching tube $Q_8$ connected in series, a third parallelly connected circuit including a ninth switching tube Q3 and tenth switching tube $Q_{10}$ connected in series, and a fourth parallelly connected circuit including an eleventh switching tube $Q_{11}$ and twelfth switching tube $Q_{12}$ connected in

series.

One end of the second primary winding $P_{112}$ of the transformer $T_{11}$ is connected between the first switching tube $Q_1$ and the second switching tube $Q_2$, and the other end thereof is connected to one end of the second primary winding $P_{212}$ of the transformer $T_{21}$, the other end of the primary winding $P_{212}$ is connected in series with a set of resonant capacitors $C_{21}$ and resonant inductors $L_{21}$ and then connected to a common node. One end of the first primary winding $P_{211}$ of the transformer $T_{21}$ is connected to the seventh switching tube $Q_7$ and the eighth switching tube $Q_8$, and the other end thereof is connected to one end of the first primary winding $P_{111}$ of the transformer $T_{11}$, the other end of the primary winding $P_{111}$ is connected in series with a set of resonant capacitors $C_{11}$ and resonant inductors $L_{11}$ and then connected to a common node, so as to connect with the primary winding $P_{212}$.

Likewise, one end of the second primary winding $P_{122}$ of the transformer $T_{12}$ is connected between the third switching tube $Q_3$ and the fourth switching tube $Q_4$, and the other end thereof is connected to one end of the second primary winding $P_{222}$ of the transformer $T_{22}$, the other end of the primary winding $P_{222}$ is connected in series with a set of resonant capacitors $C_{22}$ and resonant inductors $L_{22}$ and then connected to a common node. One end of the first primary winding $P_{221}$ of the transformer $T_{22}$ is connected to the ninth switching tube $Q_9$ and the tenth switching tube $Q_{10}$, and the other end thereof is connected to one end of the first primary winding $P_{121}$ of the transformer $T_{12}$, the other end of the primary winding $P_{121}$ is connected in series with a set of resonant capacitors $C_{12}$ and resonant inductors $L_{12}$ and then connected to a common node, so as to connect with the primary winding $P_{222}$.

One end of a second primary winding $P_{132}$ of the transformer $T_{13}$ is connected between the fifth switching tube $Q_5$ and the sixth switching tube $Q_6$, and the other end thereof is connected to one end of a second primary winding $P_{232}$ of the transformer $T_{23}$, the other end of the primary winding $P_{232}$ is connected in series with a set of resonant capacitors $C_{23}$ and resonant inductors $L_{23}$ and then connected to a common node. One end of the first primary winding $P_{231}$ of the transformer $T_{23}$ is connected to the eleventh switching tube $Q_{11}$ and the twelfth switching tube $Q_{12}$, and the other end thereof is connected to one end of a first primary winding $P_{131}$ of the transformer $T_{13}$, the other end of the primary winding $P_{131}$ is connected in series with a set of resonant capacitors $C_{13}$ and resonant inductors $L_{13}$ and then connected to a common node, so as to connect with the primary winding $P_{232}$.

FIG. 5B is a schematic diagram of driving pulses of the switching tubes in the primary circuit shown in FIG. 5A. It can be seen from FIG. 5B that the primary circuit may be controlled by three driving signals with a phase difference of 120° therebetween, wherein in the primary circuit, the first switching tube $Q_1$ and the eighth switching tube $Q_8$ conduct simultaneously, the second switching tube $Q_2$ and the seventh switching tube $Q_7$ conduct simultaneously, the third switching tube $Q_3$ and the tenth switching tube $Q_{10}$ conduct simultaneously, the fourth switching tube $Q_4$ and the ninth switching tube $Q_9$ conduct simultaneously, the fifth switching tube $Q_5$ and the twelfth switching tube $Q_{12}$ conduct simultaneously, and the sixth switching tube $Q_6$ and the eleventh switching tube $Q_{11}$ conduct simultaneously.

When the primary circuit is as shown in Example 4, the secondary circuit may be as shown in examples 5 and 6.

Example 5: the secondary circuit includes a full wave rectifier circuit composed of diodes.

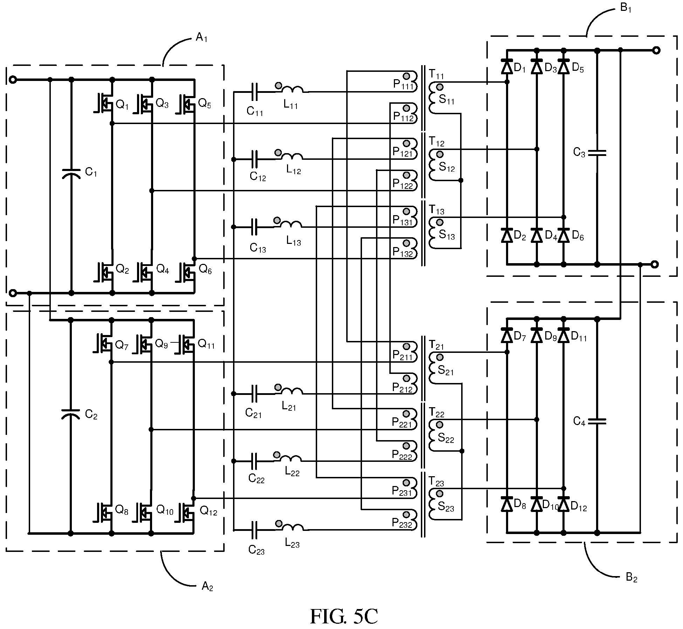

As shown in FIG. 5C, the secondary circuit $B_1$ includes four parallelly connected circuits, a first parallelly connected circuit including a capacitor $C_3$, a second parallelly connected circuit including a first diode $D_1$ and second diode $D_2$ connected in series, a third parallelly connected circuit including a third diode $D_3$ and fourth diode $D_4$ connected in series, and a fourth parallelly connected circuit including a fifth diode $D_5$ and sixth diode $D_6$ connected in series; and the secondary circuit $B_2$ has a structure similar to that of the secondary circuit $B_1$, which also includes four parallelly connected circuits, a first parallelly connected circuit including a capacitor $C_4$, a second parallelly connected circuit including a seventh diode $D_7$ and eighth diode $D_8$ connected in series, a third parallelly connected circuit including a ninth diode $D_9$ and tenth diode $D_{10}$ connected in series, and a fourth parallelly connected circuit including an eleventh diode $D_{11}$ and twelfth diode $D_{12}$ connected in series.

One end of the secondary winding $S_{11}$ of transformer $T_{11}$ is connected between the first diode $D_1$ and the second diode $D_2$, and the other end thereof is connected to a first common node; one end of the secondary winding $S_{12}$ of transformer $T_{12}$ is connected between the third diode $D_3$ and the fourth diode $D_4$, and the other end thereof is connected to the first common node; and one end of the secondary winding $S_{13}$ of transformer $T_{13}$ is connected between the fifth diode $D_5$ and the sixth diode $D_6$, and the other end thereof is connected to the first common node, that is, one ends of the secondary winding $S_{11}$, the secondary winding $S_{12}$ and the secondary winding $S_{13}$ are all connected to the same common node to achieve mutual connectivity.

Likewise, one end of the secondary winding $S_{21}$ of transformer $T_{21}$ is connected between the seven diode $D_7$ and the eighth diode $D_8$, and the other end thereof is connected to a second common node; one end of the secondary winding $S_{22}$ of transformer $T_{22}$ is connected between the ninth diode $D_9$ and the tenth diode $D_{10}$, and the other end thereof is connected to the second common node; and one end of the secondary winding $S_{23}$ of transformer $T_{23}$ is connected between the eleventh diode $D_{11}$ and the twelfth diode $D_{12}$, and the other end thereof is connected to the second common node, that is, one ends of the secondary winding $S_{21}$, the secondary winding $S_{22}$

and the secondary winding $S_{23}$ are all connected to the same common node to achieve mutual connectivity.

It should be noted that the first common node and the second common node are different nodes.

Example 6: the secondary circuit includes a synchronous rectifier circuit composed of switching tubes.

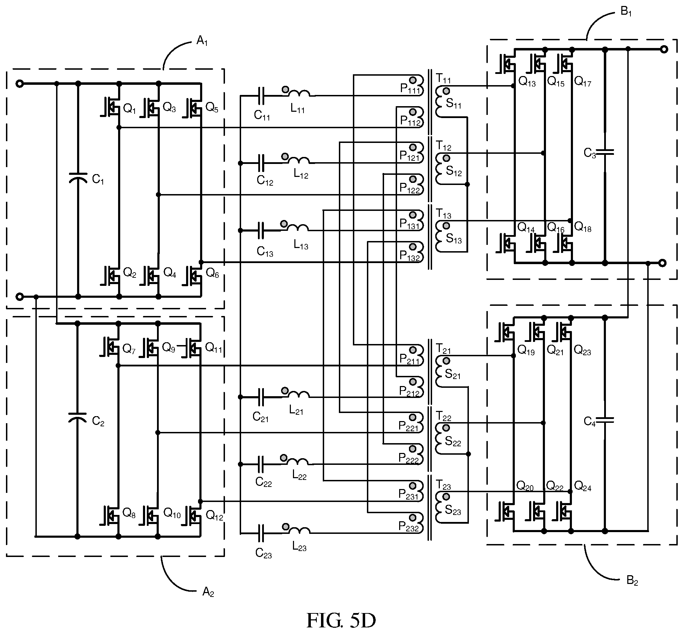

As shown in FIG. 5D, the secondary circuit B1 includes four parallelly connected circuits, a first parallelly connected circuit including a capacitor $C_3$, a second parallelly connected circuit including a thirteenth switching tube $Q_{13}$ and a fourteenth switching tube $Q_{14}$ connected in series, a third parallelly connected circuit including a fifteenth switching tube $Q_{15}$ and a sixteenth switching tube $Q_{16}$ connected in series, and a fourth parallelly connected circuit including a seventeenth switching tube $Q_{17}$ and an eighteenth switching tube $Q_{18}$ connected in series; and the secondary circuit $B_2$ has a structure similar to that of the secondary circuit $B_1$, which also includes four parallelly connected circuits, a first parallelly connected circuit including a capacitor $C_4$, a second parallelly connected circuit including a nineteenth switching tube $Q_{19}$ and a twentieth switching tube $Q_{20}$ connected in series, a third parallelly connected circuit including a twenty-first switching tube $Q_{21}$ and a twenty-second switching tube $Q_{22}$ connected in series, and a fourth parallelly connected circuit including a twenty-third switching tube $Q_{23}$ and a twenty-fourth switching tube $Q_{24}$ connected in series.

One end of the secondary winding $S_{11}$ of transformer $T_{11}$ is connected between the thirteenth switching tube $Q_{13}$ and the fourteenth switching tube $Q_{14}$, and the other end thereof is connected to the first common node; one end of the secondary winding $S_{12}$ of transformer $T_{12}$ is connected between the fifteenth switching tube $Q_{15}$ and the sixteenth switching tube $Q_{16}$, and the other end thereof is connected to the first common node; and one end of the secondary winding $S_{13}$ of transformer $T_{13}$ is connected between the seventeenth switching tube $Q_{17}$ and the eighteenth switching tube $Q_{18}$, and the other end thereof is connected to the first common node, that is, one ends of the secondary winding $S_{11}$, the secondary winding $S_{12}$ and the secondary winding $S_{13}$ are all connected to the same common node to achieve mutual connectivity.

Likewise, one end of the secondary winding $S_{21}$ of transformer $T_{21}$ is connected between the nineteenth switching tube $Q_{19}$ and the twentieth switching tube $Q_{20}$, and the other end thereof is connected to the second common node; one end of the secondary winding $S_{22}$ of transformer $T_{22}$ is connected between the twenty-first switching tube $Q_{21}$ and the twenty-second switching tube $Q_{22}$, and the other end thereof is connected to the second common node; and one end of the secondary winding $S_{23}$ of transformer $T_{23}$ is connected between the twenty-third switching tube $Q_{23}$ and the twenty-fourth switching tube $Q_{24}$, and the other end thereof is connected to the second common node, that is, one ends of the secondary winding $S_{21}$, the secondary winding $S_{22}$ and the secondary winding $S_{23}$ are all connected to the same common node to achieve mutual connectivity.

It should be noted that the first common node and the second common node are different nodes.

The above examples 1-6 respectively illustrate connection relationships between various primary circuits and secondary circuits and their transformers, wherein compared to the full wave rectifier circuits in examples 2 and 5, the synchronous rectifier circuits in examples 3 and 6 achieve bidirectional operations of the circuits. **In** addition to the above examples, those skilled in the art may connect the structure in this disclosure in which the primary circuits of the transformers are coupled in series with other types of circuits according to the principles of this disclosure on the premise of satisfying the circuit characteristics; however, this disclosure is not limited thereto.

In some embodiment, the leakage inductance of the transformer is used as resonant inductance, that is, any resonant inductance involved in the above embodiments may be integrated into the leakage inductance of the transformer to which the resonant inductance corresponds. When the leakage inductance of the transformer is appropriate, the leakage inductance functions as inductance, and at this time, there is no need to set up independent resonant inductance in a circuit.

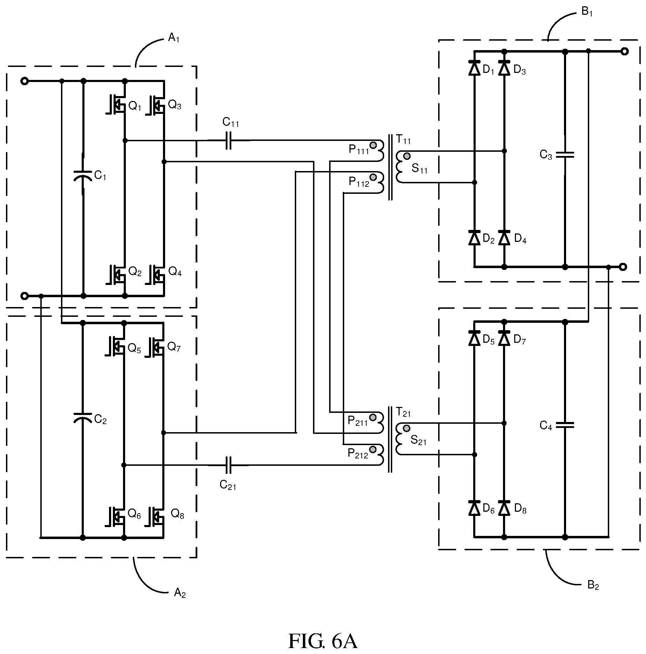

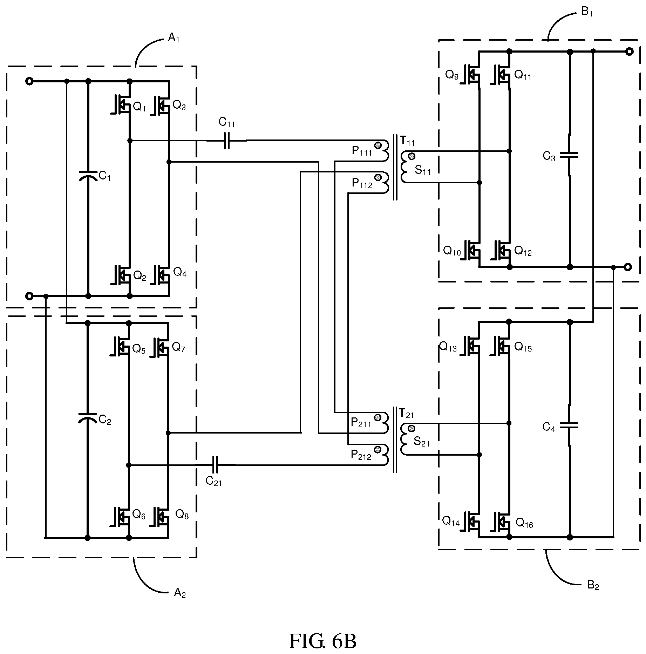

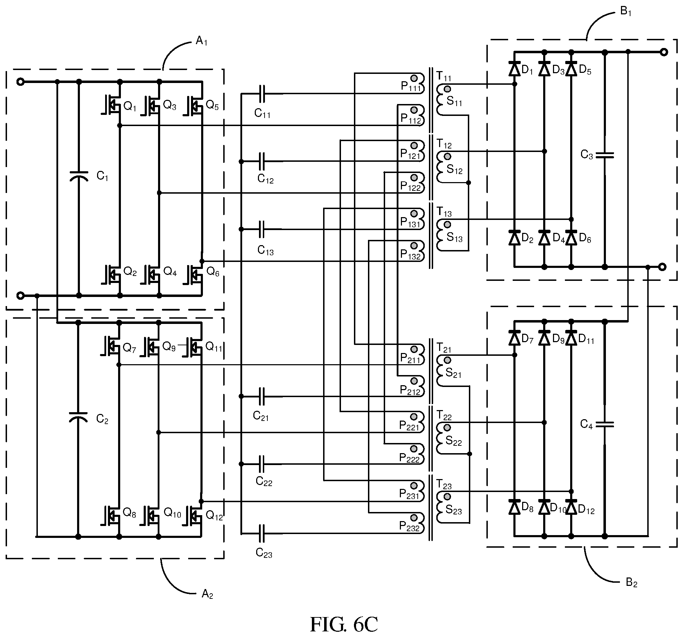

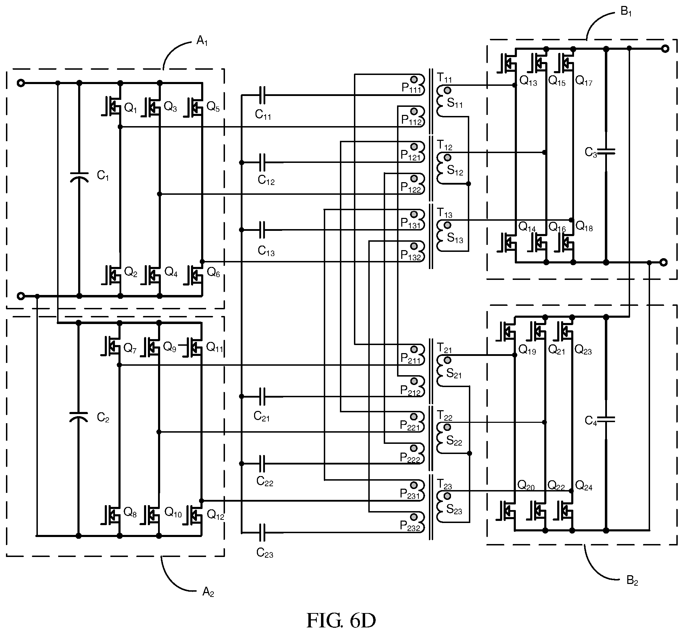

Specifically, as described above, the transformer used in this disclosure includes two primary windings and one secondary winding, the secondary winding being arranged between the two primary windings, so that the two primary windings are relatively far from each other, thereby resulting in a relatively low coupling coefficient therebetween. It can be seem from a definition of the coupling coefficient that when the coupling coefficient is relatively low, it means that the leakage inductance of the transformer is relatively large. Therefore, in this embodiment, in order to further simplify a circuit, the leakage inductance of the transformer is adjusted to be in an appropriate size to replace the resonant inductance in the circuit and achieve integration of resonant inductance. When the leakage inductance of the transformer is not large enough, inductance may be connected in series outside the transformer at the same time, and the inductance and the leakage inductance of the transformer connected in series jointly serve as resonant inductance, and reference may be made to FIGs. 6A-6D for details. FIG. 6A is a topological graph of the circuit shown in FIG. 4C after leakage inductance integration, FIG. 6B is a topological graph of the circuit shown in FIG. 4D after leakage inductance integration, FIG. 6C is a topological graph of the circuit shown in FIG. 5C after leakage inductance integration, and FIG. 6D is a topological graph of the circuit shown in FIG. 5D after leakage inductance integration.

In some embodiments, this disclosure further provides a current equalization system, which adopts any multi-transformer DCDC circuit provided in this disclosure. Other circuit structures of the current equalization system may vary as demanded, and are not specifically limited in this disclosure.

With very simple synchronization control techniques, on the premise of realizing the function of power parallel, power equalization, i.e. natural current equalization, between two power units, is simultaneously realized in the multi-transformer DCDC circuit and the current equalization system in this disclosure naturally, control schemes are simplified, and reliabilities of circuits are improved.

The purpose, technical solutions and advantages of this disclosure are described in the above embodiments. It should be noted that the above description is only embodiments of this disclosure, and is not intended to limit the protection scope of this disclosure. Any modifications, equivalent substitutions, improvements, etc. made within the principles of this disclosure shall be included in the protection scope of this disclosure.

**Claims**

1. A multi-transformer DCDC circuit, **characterized in that** it comprises two LLC circuits, each LLC circuit comprising a primary circuit, a secondary circuit and m transformers,

    each of the transformers comprising two primary windings and a secondary winding arranged between the two primary windings;
    wherein the two LLC circuits comprise a first LLC circuit and a second LLC circuit, a first primary winding of an *i-th* transformer of the first LLC circuit being connected in series with a first primary winding of an *i-th* transformer of the second LLC circuit and then connected to a corresponding primary circuit, a second primary winding of the *i-th* transformer of the first LLC circuit being connected in series with a second primary winding of an *i-th* transformer of the second LLC circuit and then connected to a corresponding primary circuit, and the secondary windings of the transformers are connected to corresponding secondary circuits; where, $1 \leq i \leq m$, and both i and m are positive integers.

2. The multi-transformer DCDC circuit according to claim 1, **characterized in that** the primary circuit comprises a full-bridge circuit, and a value of m is 1;

    wherein the primary circuit of the first LLC circuit comprises a first switching tube, a second switching tube, a third switching tube and a fourth switching tube, the first switching tube and the second switching tube being connected in series and then connected in parallel with the third switching tube and the fourth switching tube that are connected in series, the primary circuit of the second LLC circuit comprises a fifth switching tube, a sixth switching tube, a seventh switching tube and an eighth switching tube, the fifth switching tube and the sixth switching tube being connected in series and then connected in parallel with the seventh switching tube and the eighth switching tube that are connected in series;
    a first primary winding of a transformer of the first LLC circuit is connected in series with a set of resonant capacitors and resonant inductors and then connected between the first switching tube and the second switching tube, and a first primary winding of a transformer of the second LLC circuit is connected between the third switching tube and the fourth switching tube;
    a second primary winding of the transformer of the first LLC circuit is connected between the seventh switching tube and the eighth switching tube, and a second primary winding of the transformer of the second LLC circuit is connected in series with a set of resonant capacitors and resonant inductors and then connected between the fifth switching tube and sixth switching tube.

3. The multi-transformer DCDC circuit according to claim 2, **characterized in that** the secondary circuit comprises a full wave rectifier circuit;

    the secondary circuit of the first LLC circuit comprises a first diode, a second diode, a third diode and a fourth diode, the first diode and the second diode being connected in series and then connected in parallel with the third diode and the fourth diode that are connected in series, the secondary circuit of the second LLC circuit comprises a fifth diode, a sixth diode, a seventh diode and an eighth diode, the fifth diode and the sixth diode being connected in series and then connected in parallel with the seventh diode and the eighth that are connected in series;
    one end of the secondary winding of the transformer of the first LLC circuit is connected between the first diode and the second diode, and the other end thereof is connected between the third diode and the fourth diode;
    one end of the secondary winding of the transformer of the second LLC circuit is connected between the fifth diode and the sixth diode, and the other end thereof is connected between the seventh diode and the eighth diode.

4. The multi-transformer DCDC circuit according to claim 2, **characterized in that** the secondary circuit comprises a synchronous rectifier circuit;

the secondary circuit of the first LLC circuit comprises a ninth switching tube, a tenth switching tube, an eleventh switching tube and a twelfth switching tube, the ninth switching tube and the tenth switching tube being connected in series and then connected in parallel with the eleventh switching tube and the twelfth switching tube that are connected in series, the secondary circuit of the second LLC circuit comprises a thirteenth switching tube, a fourteenth switching tube, a fifteenth switching tube and a sixteenth switching tube, the thirteenth switching tube and the fourteenth switching tube being connected in series and then connected in parallel with the fifteenth switching tube and the sixteenth switching tube that are connected in series;
one end of the secondary winding of the transformer of the first LLC circuit is connected between the ninth switching tube and the tenth switching tube, and the other end thereof is connected between the eleventh switching tube and the twelfth switching tube;
one end of the secondary winding of the transformer of the second LLC circuit is connected between the thirteenth switching tube and the fourteenth switching tube, and the other end thereof is connected between the fifteenth switching tube and the sixteenth switching tube.

5. The multi-transformer DCDC circuit according to claim 1, **characterized in that** the primary circuit comprises a three-phase bridge circuit, and a value of m is 3;

wherein the primary circuit of the first LLC circuit comprises a first switching tube, a second switching tube, a third switching tube, a fourth switching tube, a fifth switching tube and a sixth switching tube, the first switching tube and the second switching tube being connected in series and then respectively connected in parallel with the third switching tube and the fourth switching tube that are connected in series and the fifth switching tube and the sixth switching tube that are connected in series;
the primary circuit of the second LLC circuit comprises a seventh switching tube, an eighth switching tube, a ninth switching tube, a tenth switching tube, an eleventh switching tube and a twelfth switching tube, the seventh switching tube and the eighth switching tube being connected in series and then respectively connected in parallel with the ninth switching tube and the tenth switching tube that are connected in series and the eleventh switching tube and the twelfth switching tube that are connected in series;
the second primary winding of the first transformer of the first LLC circuit is connected between the first switching tube and the second switching tube, the first primary winding of the first transformer of the second LLC circuit is connected between the seventh switching tube and the eighth switching tube, and the first primary winding of the first transformer of the first LLC circuit is connected in series with a set of resonant capacitors and resonant inductors, and then connected to the second primary winding of the first transformer of the second LLC circuit via another set of resonant capacitors and resonant inductors;
a second primary winding of a second transformer of the first LLC circuit is connected between the third switching tube and the fourth switching tube, a first primary winding of the second transformer of the second LLC circuit is connected between the ninth switching tube and the tenth switching tube, and the first primary winding of the second transformer of the first LLC circuit is connected in series with a set of resonant capacitors and resonant inductors, and then connected to the second primary winding of the second transformer of the second LLC circuit via another set of resonant capacitors and resonant inductors;
a second primary winding of a third transformer of the first LLC circuit is connected between the fifth switching tube and sixth switching tube, a first primary winding of the third transformer of the second LLC circuit is connected between the eleventh switching tube and the twelfth switching tube, and the first primary winding of the third transformer of the first LLC circuit is connected in series with a set of resonant capacitors and resonant inductors, and then connected to the second primary winding of the third transformer of the second LLC circuit via another set of resonant capacitors and resonant inductors.

6. The multi-transformer DCDC circuit according to claim 5, **characterized in that** the secondary circuit comprises a full wave rectifier circuit;

the secondary circuit of the first LLC circuit comprises a first diode, a second diode, a third diode, a fourth diode, a fifth diode and a sixth diode, the first diode and the second diode being connected in series and then respective connected in parallel with the third diode and the fourth diode that are connected in series and the fifth diode and the sixth diode that are connected in series, the secondary circuit of the second LLC circuit comprises a seven diode, an eighth diode, a ninth diode, a tenth diode, an eleventh diode and a twelfth diode, the seven diode and the eighth diode being connected in series and then respective connected in parallel with the ninth diode and the tenth diode that are connected in series and the eleventh diode and the twelfth diode that are connected in series; a first end of the secondary winding of the first transformer of the first LLC circuit is connected between the first diode and the second diode, a first end of the secondary winding of the second transformer of the first LLC circuit is connected between the third diode and the fourth diode, a first end of the secondary winding of the third transformer of the first LLC circuit is connected between the fifth diode and the sixth diode, a second end of the secondary winding of the first transformer of the first LLC circuit is connected to a second end of the secondary winding of the second transformer of the first LLC circuit and a second end of the secondary winding of the third transformer of the first LLC circuit; a first end of the secondary winding of the first transformer of the second LLC circuit is connected between the seventh diode and the eighth diode, a first end of the secondary winding of the second transformer of the second LLC circuit is connected between the ninth diode and the tenth diode, a first end of the secondary winding of the third transformer of the second LLC circuit is connected between the eleventh diode and the twelfth diode, a second end of the secondary winding of the first transformer of the second LLC circuit is connected to a second end of the secondary winding of the second transformer of the second LLC circuit and a second end of the secondary winding of the third transformer of the second LLC circuit.

7. The multi-transformer DCDC circuit according to claim 5, **characterized in that** the secondary circuit comprises a synchronous rectifier circuit;

the secondary circuit of the first LLC circuit comprises a thirteenth switching tube, a fourteenth switching tube, a fifteenth switching tube, a sixteenth switching tube, a seventeenth switching tube and an eighteenth switching tube, the thirteenth switching tube and the fourteenth switching tube being connected in series and then respectively connected in parallel with the fifteenth switching tube and the sixteenth switching tube that are connected in series and the seventeenth switching tube and the eighteenth switching tube that are connected in series, and the secondary circuit of the second LLC circuit comprises a nineteenth switching tube, a twentieth switching tube, a twenty-first switching tube, a twenty-second switching tube, a twenty-third switching tube and a twenty fourth switching tube, the nineteenth switching tube and the twentieth switching tube being connected in series and then respectively connected in parallel with the twenty-first switching tube and the twenty-second switching tube that are connected in series and the twenty-third switching tube and the twenty-fourth switching tube that are connected in series; the first end of the secondary winding of the first transformer of the first LLC circuit is connected between the thirteenth switching tube and fourteenth switching tube, the first end of the secondary winding of the second transformer of the first LLC circuit is connected between the fifteenth switching tube and sixteenth switching tube, the first end of the secondary winding of the third transformer of the first LLC circuit is connected between the seventeenth switching tube and eighteenth switching tube, the second end of the secondary winding of the first transformer of the first LLC circuit is connected to the second end of the secondary winding of the second transformer of the first LLC circuit and the second end of the secondary winding of the third transformer of the first LLC circuit; the first end of the secondary winding of the first transformer of the second LLC circuit is connected between the nineteenth switching tube and the twentieth switching tube, the first end of the secondary winding of the second transformer of the second LLC circuit is connected between the twenty-first switching tube and the twenty-second switching tube, the first end of the secondary winding of the third transformer of the second LLC circuit is connected between the twenty-third switching tube and twenty-fourth switching tube, and the second end of the secondary winding of the first transformer of the second LLC circuit is connected to the second end of the secondary winding of the second transformer of the second LLC circuit and the second end of the secondary winding of the third transformer of the second LLC circuit.

8. The multi-transformer DCDC circuit according to any one of claims 2-7, **characterized in that** any resonant inductor in the multi-transformer DCDC circuit is integrated into leakage inductance of a transformer to which the resonant inductor corresponds.

9. The multi-transformer DCDC circuit according to any one of claims 1-7, **characterized in that** the primary circuit of the first LLC circuit is connected in parallel with the primary circuit of the second LLC circuit.

10. The multi-transformer DCDC circuit according to any one of claims 1-7, **characterized in that** the primary circuit of the first LLC circuit is connected in series with the primary circuit of the second LLC circuit.

11. A current equalization system, **characterized in that** the current equalization system uses the multi-transformer DCDC circuit as claimed in any one of claims 1-10.

FIG. 1A

FIG. 1B

FIG. 2A

FIG. 2B

FIG. 3A

FIG. 3B

FIG. 4A

FIG. 4B

18

FIG. 4C

FIG. 4D

FIG. 5A

FIG. 5B

FIG. 5C

FIG. 5D

FIG. 6A

FIG. 6B

FIG. 6C

FIG. 6D

## INTERNATIONAL SEARCH REPORT

| International application No. |
| --- |
| **PCT/CN2023/129438** |

| A. | CLASSIFICATION OF SUBJECT MATTER |
| --- | --- |

H02M3/335(2006.01)i

According to International Patent Classification (IPC) or to both national classification and IPC

| B. | FIELDS SEARCHED |
| --- | --- |

Minimum documentation searched (classification system followed by classification symbols)

IPC：H02M

Documentation searched other than minimum documentation to the extent that such documents are included in the fields searched

Electronic data base consulted during the international search (name of data base and, where practicable, search terms used)

CNABS; VEN; CNTXT; USTXT; WOTXT; EPTXT; CNKI; IEEE: 谐振, 变压器, 绕组, 线圈, 串联, 并联, 电流, 平均, resonance, transformer, winding, coil, series, parallel, current, average

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115882731 A (ACEPOWER TECHNOLOGY CO., LTD.) 31 March 2023 (2023-03-31) description, paragraphs 5-104, and figures 2A-6D | 1-11 |
| X | CN 217135376 U (HANGZHOU BOCO ELECTRONICS CO., LTD.) 05 August 2022 (2022-08-05) description, paragraphs 37-51, and figures 2-32 | 1-11 |
| X | CN 114094836 A (NANJING UNIVERSITY OF AERONAUTICS AND ASTRONAUTICS) 25 February 2022 (2022-02-25) description, paragraphs 22-92, and figures 1-5d | 1-11 |
| X | US 10804812 B1 (ENERSYS DELAWARE INC.) 13 October 2020 (2020-10-13) description, column 5, paragraph 1 to column 12, paragraph 4, and figures 3-9 | 1-11 |
| A | CN 114039491 A (HUAWEI DIGITAL POWER TECHNOLOGIES CO., LTD.) 11 February 2022 (2022-02-11) entire document | 1-11 |

☐ Further documents are listed in the continuation of Box C.  ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 January 2024** | **20 January 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/129438**

| Patent document cited in search report | | | Publication date (day/month/year) | Patent family member(s) | | | Publication date (day/month/year) |
|---|---|---|---|---|---|---|---|
| CN | 115882731 | A | 31 March 2023 | CN | 218997940 | U | 09 May 2023 |
| CN | 217135376 | U | 05 August 2022 | | None | | |
| CN | 114094836 | A | 25 February 2022 | | None | | |
| US | 10804812 | B1 | 13 October 2020 | WO | 2020210180 | A1 | 15 October 2020 |
| | | | | US | 2020328696 | A1 | 15 October 2020 |
| | | | | EP | 3954032 | A1 | 16 February 2022 |
| CN | 114039491 | A | 11 February 2022 | WO | 2023077847 | A1 | 11 May 2023 |

Form PCT/ISA/210 (patent family annex) (July 2022)